# EUROPÄISCHE PATENTSCHRIFT

(11) **EP 0 973 082 B1**
(45) Veröffentlichungstag und Bekanntmachung des Hinweises auf die Patenterteilung: **14.11.2001**
(21) Anmeldenummer: 99113106.1
(22) Anmeldetag: 07.07.1999
(51) Int. Cl.: G05D 16/20, F04B 49/20, F04D 15/00

(54) **Verfahren zur Regelung des Drucks eines Fluids**
Method for controlling a fluid pressure
Procédé de régulation de la pression d'un fluide

(30) Priorität: 16.07.1998 DE 19831997
(43) Veröffentlichungstag der Anmeldung: 19.01.2000
(73) Patentinhaber: Hennel, Ewald, D-30419 Hannover (DE); Hennel, Maik, 30419 Hannover (DE)
(72) Erfinder: Hennel, Ewald, 30419 Hannover (DE); Hennel, Maik, 30419 Hannover (DE)
(74) Vertreter: Döring, Roger, Dipl.-Ing.

(56) Entgegenhaltungen:
- EP-A- 0 309 596
- EP-A- 0 390 627
- DE-A- 4 243 118
- GB-A- 2 293 403
- PATENT ABSTRACTS OF JAPAN vol. 11, no. 302 (M-629), 2. Oktober 1987 (1987-10-02) & JP 62 093498 A (HITACHI LTD)

## Beschreibung

Die Erfindung bezieht sich auf ein Verfahren zur Regelung des Drucks eines Fluids, das durch eine von einem elektrischen Motor angetriebenen Druckerzeuger in einem mindestens einen Verbraucher aufweisenden Rohrsystem bewegt wird.

"Fluid" im Sinne der Erfindung können beispielsweise Wasser, Dampf oder Gas sein. Das Verfahren wird beispielsweise dort eingesetzt, wo zur Versorgung sehr vieler Verbraucher ein erhöhter Druck für das Fluid benötigt wird. Das kann bei Hochhäusern oder Hotelanlagen der Fall sein, wo an jeder Zapfstelle von Wasser ein ausreichender Druck benötigt wird. Das gilt analog aber auch für große Heizungsanlagen oder Gasversorgungsbetriebe. "Druckerzeuger" kann dementsprechend eine Pumpe oder ein Kompressor sein. Stellvertretend für alle möglichen Anwendungen wird das Verfahren im folgenden am Beispiel der mit einer Pumpe arbeitenden Wasserversorgung beschrieben.

Der zur Versorgung aller an ein der Wasserversorgung dienendes Rohrsystem angeschlossenen Zapfstellen als Verbraucher benötigte maximale Druck kann beispielsweise durch Berechnung festgestellt werden. Obwohl dieser maximale Druck nur benötigt wird, wenn alle Verbraucher Wasser haben wollen, werden entsprechende Anlagen durchweg mit konstant gehaltenem, maximalem Druck betrieben. Das bedeutet einen hohen Energieaufwand, zum Betrieb der Pumpenaggregate sowie einen erhöhten Verschleiß an Pumpen und Ventilen. Auch die Rohre werden durch den dauernd anstehenden hohen Druck belastet, so daß es relativ häufig zu Rohrbrüchen kommt. Schließlich treten oft störende Strömungsgeräusche auf.

Aus Dokument GB-A-2 293 403 ist ein Verfahren zur Regelung des Drucks einer Flüssigkeit bekannt, die durch einen von einem elektrischen Motor angetriebenen Druckerzeuger in einem Rohrsystem bewegt wird. Dabei wird die Drehzahl des Motors durch einen Regler geregelt. Dem Regler wird als Istwert ständig eine der Menge des strömenden Fluids proportionale elektrische Größe zugeführt und bei einer Abweichung des Istwertes wird die Drehzahl des Motors in einem Ausgleichsinne geregelt.

Der Erfindung liegt die Aufgabe zugrunde, das eingangs geschilderte Verfahren so weiterzubilden, daß die Belastung des Rohrsystems mit zugehörigen Aggregaten vermindert werden kann.

Diese Aufgabe wird gemäß der Erfindung dadurch gelöst,
- daß die Drehzahl des Motors zur Regelung des Drucks im Rohrsystem durch einen Regler geregelt wird, dem mindestens eine den Druck des Fluids im Rohrsystem in Abhängigkeit von der Menge des strömenden Fluids bzw. von der Strömungsgeschwindigkeit desselben wiedergebende Regelkurve eingeprägt ist, die zwischen einem vorgegebenen Minimum und einem vorgegebenen Maximum des Drucks derart gleichförmig gebogen verläuft, daß sie in Richtung zunehmenden Drucks oberhalb einer die Punkte von minimalem Druck und maximalem Druck verbindenden Geraden liegt und im mittleren Bereich zwischen den beiden Punkten den größten Abstand von derselben hat,
- daß dem Regler als Istwert ständig eine der Menge des strömenden Fluids bzw. der Strömungsgeschwindigkeit desselben proportionale elektrische Größe zugeführt wird woraus dieser, anhand der Regelkurve, für jeden Istwert einen Sollwert für den Druck bestimmt, der von dem Druckerzeuger erzeugt werden muß
- daß bei einer Abweichung des erzeugten Druckes vom entsprechend der Regelkurve gegebenen Sollwert des Drucks die Drehzahl des Motors im Ausgleichsinne geregelt wird.

Mit diesem Verfahren wird der Energiebedarf zum Betrieb des Pumpenaggregats minimiert, weil ständig nur der Druck erzeugt wird, der für die Versorgung tatsächlich eingeschalteter Verbraucher benötigt wird. Dabei wird durch die gebogen verlaufende Regelkurve dem Rohrsystem ständig ein druckmäßig etwas erhöhtes Angebot zur Verfügung gestellt, so daß das jeweilige Fluid mit Sicherheit sofort zu fließen beginnt, wenn eine Zapfstelle des Rohrsystems geöffnet wird. Durch diese Regelkurve wird außerdem ein Überschwingen oder Unterschwingen des Regelvorgangs vermieden, durch welche das ganze Verfahren außer Tritt fallen könnte. Der Verschleiß von Pumpenaggregat und Ventilen wird vermindert. Rohrbrüche können weitgehendst vermieden werden, weil im Rohrsystem stets nur der für die Strömung des Wassers erforderliche Druck herrscht. Störende Strömungsgeräusche treten nicht mehr auf. Schließlich können kleinere Druckausgleichsgefäße eingesetzt werden. Das Verfahren ist besonders für höhere Drücke geeignet, die über 6 bar liegen.

Vorteilhafte Ausgestaltungen der Erfindung gehen aus den Unteransprüchen hervor.

Das Verfahren nach der Erfindung wird anhand der Zeichnungen als Ausführungsbeispiel erläutert.

Es zeigen:
Fig. 1 schematisch eine Anlage, bei der das Verfahren nach der Erfindung einsetzbar ist.
Fig. 2 bei dem Verfahren verwendete Regelkurven.
Fig. 3 eine gegenüber Fig. 1 andere Anlage

Die folgende Beschreibung bezieht sich - ohne Einschränkung des eingangs erwähnten Geltungsbereichs der Erfindung - weiter auf die Wasserversorgung von Zapfstellen mittels einer Pumpe. Zur weiteren Vereinfachung werden statt der Worte "Drehzahl des die Pumpe antreibenden Motors" sinngemäß die Worte "Drehzahl der Pumpe" verwendet.

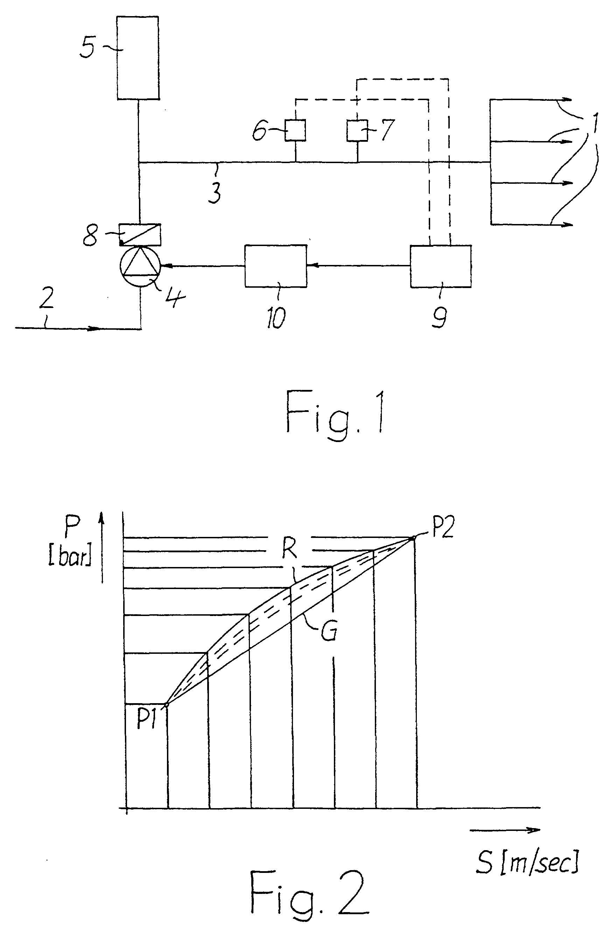

Fig. 1 zeigt beispielsweise schematisch eine Anlage zur Wasserversorgung eines Hochhauses. Das im Hochhaus angeordnete Rohrsystem mit seinen Verbrauchern, den Zapfstellen, ist durch vier Pfeile 1 nur angedeutet. Das über eine Rohrleitung 2 zugeführte Wasser wird durch ein Rohr 3 mittels einer Pumpe 4 in das Rohrsystem 1 gedrückt. Die Pumpe 4 wird von einem nicht dargestellten, elektrischen Motor mit regelbarer Drehzahl angetrieben. An das Rohr 3 sind ein Druckausgleichsgefäß 5, ein Strömungssensor 6 und ein Druckmeßgerät 7 angeschlossen. Im Rohr 3 kann außerdem eine Rückschlagklappe 8 angebracht sein.

Strömungssensor 6 und Druckmeßgerät 7 sind elektrisch mit einem Regler 9 verbunden, durch welchen die Drehzahl der Pumpe 4 über einen Umsetzer 10, beispielsweise einen Frequenzumrichter, geregelt wird. Dem Regler 9 sind Regelkurven R eingeprägt, wie sie aus Fig. 2 hervorgehen. In Fig. 2 ist der Druck P des Wassers im Rohrsystem in bar über der Strömungsgeschwindigkeit S desselben in m/sec aufgetragen. Statt der Strömungsgeschwindigkeit S könnte auch die Menge des transportierten Wassers in m³/Stunde verwendet werden, wenn statt des Strömungssensors 6 ein die Durchflußmenge erfassendes Gerät eingesetzt wird.

Die Regelkurve R verläuft zwischen einem Punkt P1 minimalen Drucks und einem Punkt P2 maximalen Drucks gleichförmig gebogen. Die Wölbung der Regelkurve R ist in Richtung zunehmenden Drucks von einer Geraden G weg gerichtet, welche die Punkte P1 und P2 miteinander verbindet. Der Abstand zwischen der Regelkurve R und der Geraden G ist im mittleren Bereich am größten.

Die Regelkurve R kann im geschilderten Sinne unterschiedlich verlaufen, mit mehr oder weniger großem Abstand von der Geraden G. Entsprechende Regelkurven sind in Fig. 2 zusätzlich gestrichelt eingezeichnet. Der jeweilige Verlauf der Regelkurve R richtet sich nach dem Strömungswiderstand des zu versorgenden Rohrsystems 1. Der kann in üblicher Technik vor Einsatz des Verfahrens berechnet werden. Dabei wird auch der minimale Druck festgelegt. Der maximal erforderliche Druck ergibt sich wieder aus dem Strömungswiderstand des Rohrsystems 1.

Das Verfahren nach der Erfindung arbeitet beispielsweise wie folgt:

Zunächst werden das Verfahren bzw. die zu versorgende Anlage kalibriert. Dazu werden der Strömungswiderstand des Rohrsystems 1 berechnet und die Punkte P1 minimalen Drucks und P2 maximalen Drucks festgelegt. Anschließend wird eine Regelkurve R des Reglers 9 bestimmt. Dann kann das Verfahren durch Einschalten der Pumpe 4 in Betrieb genommen werden. Nach dem Einschalten der Pumpe 4 wird Wasser in das Rohrsystem 1 gedrückt. Die Strömungsgeschwindigkeit S des Wassers im Rohr 3 hängt von der Anzahl der geöffneten Zapfstellen ab. Sie wird vom Strömungssensor 6 erfaßt und dem Regler 9 in Form einer elektrischen Größe als Istwert aufgegeben. Jedem Wert der Strömungsgeschwindigkeit S ist über die Regelkurve R ein Druck P zugeordnet, der von der Pumpe 4 erzeugt werden muß. Der Regler 9 gibt ständig elektrische Signale an den Umsetzer 10, über den die Drehzahl der Pumpe 4 geregelt und auf den Sollwert gemäß Regelkurve R eingestellt wird. Der entsprechende "richtige" Druck P kann durch das Druckmeßgerät 7 kontrolliert werden, das elektrisch mit dem Regler 9 verbunden ist.

Für die Regelung der Drehzahl der Pumpe 4 und damit des Drucks P im Rohrsystem 1 wird eine Regelkurve R verwendet, die zwischen den Punkten P1 und P2, also zwischen minimalem und maximalem Druck, nicht linear, sondern gebogen verläuft. Die Regelkurve R hat etwa den Verlauf einer e-Funktion. Es ist dadurch sichergestellt, daß trotz des geregelten Drucks P im Rohrsystem 1 keine Unterversorgung einzelner Zapfstellen eintreten kann, da der Druck - bis auf die beiden Endpunkte P1 und P2 der Regelkurve R - stets höher liegt als er bei linearer Regelung liegen würde. Das Wasser beginnt also an jeder Zapfstelle sofort zu laufen, sobald dieselbe geöffnet wird. Trotzdem kommt es auch zu keiner Überversorgung der Zapfstellen, da der Druck P des Wassers im Rohrsystem 1 ständig der Strömungsgeschwindigkeit S desselben und damit dem tatsächlichen Bedarf angepaßt wird.

Die Pumpe 4 kann bei nur geringem Wasserbedarf ständig mit einer dem minimalen Druck P1 entsprechenden Drehzahl betrieben werden. Sie kann aber auch abgeschaltet werden, wenn die Strömungsgeschwindigkeit S des Wassers unter den dem Punkt P1 entsprechenden Wert sinkt. Da die Strömungsgeschwindigkeit S des Wassers auch dann ständig gemessen wird, wird eine Erhöhung derselben sofort erfaßt, so daß die Pumpe 4 wieder eingeschaltet und auf ihre richtige Drehzahl geregelt wird.

Zur Erhöhung der Sicherheit des Verfahrens kann im Regler 9 eine Strömungseinheit angebracht sein, die beispielsweise bei Ausfall des Strömungssensors 6 reagiert. Die Drehzahl der Pumpe 4 wird dann automatisch solange bei einem Wert konstant gehalten, der einem oberhalb von P1 liegenden Druck entspricht, bis die Störung beseitigt ist. Dazu kann außerdem ein optisches und/oder akustisches Signal ausgelöst werden, durch welches auf die Störung aufmerksam gemacht wird.

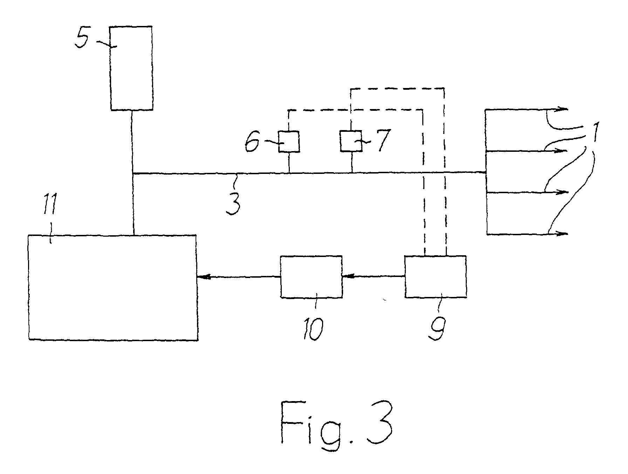

Das Verfahren ist gemäß Fig. 3 auch für eine Kompressoranlage zur Versorgung von Verbrauchern mit Gas geeignet. Gleiche Teile wie in Fig. 1 sind in Fig. 3 mit den gleichen Bezugszeichen versehen. Es ist also nur die Pumpe 4 durch einen Kompressor 11 ersetzt und das zu bewegende Fluid ist nicht Wasser, sondern Gas. Der Kompressor 11 wird ebenso wie die Pumpe 4 von einem drehzahlregelbaren elekrischen Motor angetrieben. Dessen Drehzahl wird wieder gemäß einer Regelkurve R nach Fig. 2 von dem Regler 9 geregelt, dem als Istwert die Strömungsgeschwindigkeit S des Gases im Rohr 3 aufgegeben wird. Das erfolgt mit einem elektrischen Signal vom Strömungssensor 6, der - wie bei Fig. 1 geschildert - durch ein die Durchflußmenge erfassendes Gerät ersetzt werden könnte.

## Patentansprüche

1. Verfahren zur Regelung des Drucks eines Fluids, das durch einen von einem elektrischen Motor angetriebenen Druckerzeuger in einem mindestens einen Verbraucher aufweisenden Rohrsystem bewegt wird, **dadurch gekennzeichnet,**
- **daß** die Drehzahl des Motors zur Regelung des Drucks (P) im Rohrsystem (1) durch einen Regler (9) geregelt wird, dem mindestens eine den Druck des Fluids im Rohrsystem (1) in Abhängigkeit von der Menge des strömenden Fluids bzw. von der Strömungsgeschwindigkeit (S) desselben wiedergebende Regelkurve (R) eingeprägt ist, die zwischen einem vorgegebenen Minimum und einem vorgegebenen Maximum des Drucks derart gleichförmig gebogen verläuft, daß sie in Richtung zunehmenden Drucks (P) oberhalb einer die Punkte von minimalem Druck (P1) und maximalem Druck (P2) verbindenden Geraden (G) liegt und im mittleren Bereich zwischen den beiden Punkten (P1,P2) den größten Abstand von derselben hat,
- **daß** dem Regler (9) als Istwert ständig eine der Menge des strömenden Fluids bzw. der Strömungsgeschwindigkeit (S) desselben proportionale elektrische Größe zugeführt wird, woraus dieser, anhand der Regelkurve, für jeden Istwert einen Sollwert für den Druck bestimmt, der von dem Druckerzeuger erzeugt werden muß
- **daß** bei einer Abweichung des erzeugten Druckes vom entsprechend der Regelkurve (R) gegebenen Sollwert des Drucks (P) die Drehzahl des Motors im Ausgleichsinne geregelt wird.

2. Verfahren nach Anspruch 1, **dadurch gekennzeichnet, daß** dem Regler (9) in Abhängigkeit vom Strömungswiderstand unterschiedlicher Rohrsysteme unterschiedliche Regelkurven (R) eingeprägt werden.

3. Verfahren nach Anspruch 1 oder 2, **dadurch gekennzeichnet, daß** der Motor bei Unterschreiten einer dem minimalen Druck (P1) entsprechenden Menge des strömenden Fluids abgeschaltet und bei einer wieder steigenden Menge desselben automatisch wieder eingeschaltet wird.

4. Verfahren nach einem der Ansprüche 1 bis 3, **dadurch gekennzeichnet, daß** der Druck im Rohrsystem (1) ständig gemessen und ebenfalls dem Regler (9) aufgegeben wird.

5. Verwendung des Verfahrens nach einem der Ansprüche 1 bis 4 zur Versorgung einer Anlage, in der ein minimaler Druck von 6 bar für das im Rohrsystem (1) bewegte Fluid vorgegeben ist.

## Claims

1. A method to control the pressure of a fluid that is moved by a pressure generator driven by an electric motor in a pipe system with the least one consumer, **characterized in that**:
- the speed of the motor to regulate pressure (P) in the pipe system (1) is controlled by a controller (9) which is fed at least one control curve (R) that corresponds to the pressure of the fluid in the pipe system (1), that pressure depends on the amount of the flowing fluid or flow speed (S), and the control curve runs uniformly curved between a set minimum and set maximum pressure such that it lies above the line (G) connecting the minimum pressure (P1) and maximum pressure (P2) in the direction of increasing pressure (P) and is at the greatest distance from the line between two the points (P1,P2) at the middle,
- the controller (9) is continuously fed an electrical quantity proportional to the amount of flowing fluid or flow speed (S) as an actual value, and a setpoint for the pressure (P) that must be generated by the pressure generator is determined from the electrical quantity using the control curve (R) for each actual value, and
- when the generated pressure deviates from the pressure (P) setpoint corresponding to the control curve, the speed of the motor is controlled to compensate for it.

2. A method according to claim 1, **characterized in that** different control curves (R) are fed to the controller (9) depending on the flow resistance of different pipe systems.

3. A method according to claim 1 or 2, **characterized in that** the motor is turned off when the flowing fluid falls below an amount corresponding to a minimum pressure (P1), and the motor is automatically turned on again when the amount of fluid rises above the minimum pressure.

4. A method according to one of claims 1 - 3, **characterized in that** the pressure in the pipe system (1) is continuously measured and sent to the controller (9).

5. The use of the method according to one of claims 1 - 4 to supply a system in which a minimum pressure is 6 bar for the fluid moved in the pipe system (1).

## Revendications

1. Procédé de régulation de la pression d'un fluide, drainé par l'intermédiaire d'un générateur de pression, lui-même entraîné par un moteur électrique, dans un système de tuyaux comportant au minimum un utilisateur, **remarquable du fait que**
- le régime du moteur permettant de réguler la pression (P) au sein du système de tuyauterie (1) est contrôlé par un régulateur (9), régi au minimum par une courbe de régulation retraçant la pression du fluide dans le système de tuyauterie (1) en fonction du volume de fluide en circulation ou de sa vitesse de circulation (S). Entre les valeurs minimale et maximale prescrites pour la pression, cette courbe de régulation (R) curviligne et uniforme est telle qu'elle se situe au-dessus de l'une des droites reliant les points de pression minimale (P1) et maximale (P2) à mesure que la pression augmente; la distance entre cette droite (G) et les deux points en question (P1 et P2) atteint son maximum au centre de la courbe;
- une valeur nominale intégrée au régulateur (9) correspond à une grandeur électrique proportionnelle au volume de fluide en circulation ou de sa vitesse de circulation (S). Ce régulateur déduit une valeur effective de la pression devant être générée par le générateur de pression pour chaque valeur nominale sur la base de la courbe de régulation;
- lors d'une divergence entre la pression générée et la pression réelle (P) donnée par la courbe (R), le régime du moteur est réajuster par rapport à la pression générée.

2. Le procédé décrit dans la spécification 1 est remarquable du fait que le régulateur (9) peut utiliser différentes courbes de régulation (R) en fonction de la résistance hydrodynamique des différentes tuyauteries.

3. Le procédé décrit dans les spécifications 1 ou 2 est **remarquable du fait que** le moteur est arrêté immédiatement lorsque le volume du fluide en circulation atteint un niveau inférieur à la valeur correspondant à la pression minimale (P1) et qu'il redémarre dès que le volume de ce fluide augmente.

4. Le procédé décrit dans l'une des spécifications (1, 2 et 3) est **remarquable du fait que** la pression au sein de la tuyauterie (1) est mesurée en permanence et également transmise au régulateur (9).

5. Le procédé décrit dans l'une des trois spécifications convient à l'alimentation d'une installation, dont la pression du fluide en circulation dans la tuyauterie (1) s'élève au minimum à 6 bar.
